# EUROPEAN PATENT APPLICATION

(11) **EP 1 729 284 A1**
(43) Date of publication of application: **06.12.2006**
(21) Application number: 06111582.0
(22) Date of filing: 23.03.2006
(51) Int. Cl.: G10L 15/22

(54) **Method and systems for a accessing data by spelling discrimination letters of link names**

(30) Priority: 30.05.2005 EP 05104623
(71) Applicant: International Business Machines Corporation, Armonk, N.Y. 10504 (US)
(72) Inventor: Incertis Carro, Fernando, 46182, Valencia (ES)
(74) Representative: Imbert de Tremiolles, Ghislain

(57) **Abstract**

A method for marking hyperlinks, for creating an associated link spelling table, and for accessing the address of an hyperlink marked according to this method is disclosed. In a preferred embodiment, a portion of a text is selected, the hyperlinks of the selected text are identified, a link spelling table is created, a set of discrimination letter subsets characterizing each of the identified hyperlink is determined, each discrimination letter subset is associated to the address of the corresponding hyperlink in said link spelling table, and the discrimination letter subset in each hyperlink of the selected text portion are marked. Then, for accessing an hyperlink, the user spells the discrimination letters that are converted for extracting the discrimination letter subset, and the link spelling table is accessed to determine if the extracted discrimination letter subset belongs to the link spelling table. If the extracted discrimination letter subset belongs to the link spelling table, the address associated to said extracted discrimination letter subset is recovered and the data localized at said address are accessed.

## Description

### Field of the Invention

The present invention relates generally to the field of interactive hypermedia systems and data access systems, and more specifically to method and systems for accessing electronic data linked to a electronic or printed document by spelling discrimination letters of the link names, or hyperlinks, marked on this document.

### Background of the Invention

Even if the enthusiasm of the public for computer-based multimedia information has been considered by many analysts as a threat to the conventional forms of hard-copied publishing, reading paper cannot be compared with reading an electronic media. The experience shows that reading paper remains preferable for most people, whether they are familiar with computers or not. For most people paper has a number of advantages: paper publications are easy to read, to mark, and to manipulate, and paper publications are familiar, portable, and can be easily shared and distributed.

Several publications compare electronic documents versus printed documents, for example,
- "The Last Book", IBM Systems Journal, Vol 36, No. 3 Vol 36, No. 3 - 1997, by J. Jacobson, B. Comiskey, C. Turner, J. Albert, and P. Tsao of the MIT Media Laboratory.
- "Literature at the Human-Computer Seam", by Michael D. Levi, Presented at the Modern Language Association 2000 Annual Convention, on http://www.bls.gov/ore/htm_papers/st000100.htm

If many electronic document systems e.g., Web browsers or e-books readers, attempt to replace paper and printed publications by their electronic equivalents, a lot of users still use printed paper publications.

With the development of electronic documents, a new mechanism for linking data resources has appeared : the hyperlinks. Hyperlinks can be defined as *"Text or graphical image associated with a URL such that when the user clicks on it, the browser displays the page at that location".* Hyperlinks simplify the navigation among huge set of electronic documents by providing a one-click selection mechanism. In view of its efficiency, modified versions of this selection mechanism have been developed for printed documents e.g., U.S. Patent N°6,771,283.

Given the amount of information readily available on the Internet and the easiness for accessing the Internet, everywhere, at any time, the interface allowing direct and/or simple access to specific information becomes a key factor to provide valuable information. If the traditional interface of personal computers, based on the combination of the screen, the keyboard, and a pointer such as a mouse, allows a relatively fast and efficient access to the desired information, it is more problematic for mobile computers, wearable computers, handheld devices, and the likes, that offer reduced screens, none or miniaturized keyboards, and basic selection mechanisms. Such selection mechanisms may consist of miniaturized mouses or sensor pads with pointing stylus, combined with light beams for effecting movement of a cursor on the screens. The tedious process of pointing on a small screen or typing data on a miniaturized keyboard limits the ability to enter information through small display screens and portable keyboards. This can be crippling for persons who are physically challenged, or have a limited range of movement due to the age or to arthritis.

The development of speech recognition technology has opened up a new era of man-machine interaction, since a speech user interface and Automatic Speech Recognition (ASR) provides a convenient and highly natural method of data exchange between a user and a computer, particularly mobile or handheld computer. For example, U.S. patent No. 6,101,472 entitled "Data processing system and method for navigating a network using a voice command", by Giangarra et al., discloses a voice command interface which allows a user to merely speak the name of a link to receive the desired corresponding web page from a communication network, such as the Internet. During operation, a client computer accesses a current web page from a server. When a new web page is accessed, a processing unit in the data processing system provides control signals to a speech recognition unit to clear a vocabulary list currently stored within the speech recognition unit. Subsequently, the processing unit commences to parse the HTML source code of the accessed web page. The processing unit then determines whether the accessed web page has any links therein. If hyperlinks are embedded within the web page, the processing unit detects those hyperlinks during a parsing operation and enables the speech recognition unit to store the text displayed to an external user which corresponds to the link in a special vocabulary list of the speech recognition unit. A user is then able to provide a voice command to access the link by speaking the text stored within the special vocabulary list. Upon speaking that text, the processing unit accesses a web page corresponding to the link identified by the text.

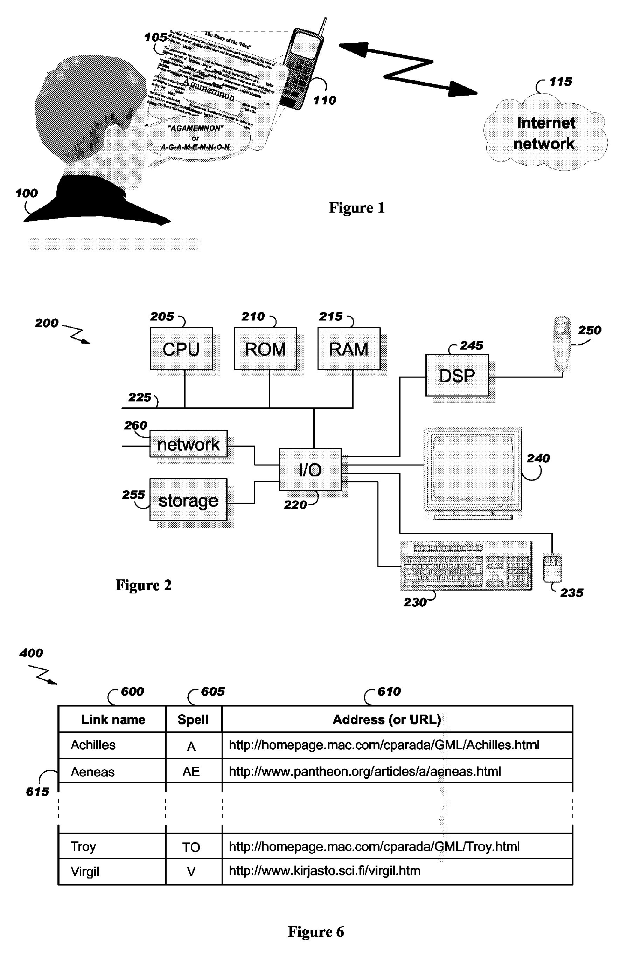

According to figure 1 depicting the prior art, it is shown a user 100 who pronounces the link name written in a document 105 displayed on the screen of a handheld device 110. Alternatively, the user 100 can spell the letters. For sake of illustration, the link name is "AGAMEMNON". The pronunciation of the word "Agamemnon", or alternatively its spelling, is analyzed by a speech recognition engine of the handheld device 110. When the link name is recovered, the corresponding data are accessed through the network 115 to which the handheld device 110 is connected, and displayed on the handheld device 110. Alternatively, the accessed data can be "read" by the handheld device 110 using a text-to-speech synthesis software. The connection between the handheld device 110 and the network 115 can be of any type (wide area network, local area network, wire connection, wireless connection, ...).

Speech recognition is the process by which an acoustic signal received by a microphone is converted to a set of text words. Speech recognition involves software and hardware that cooperate to audibly detect human speech and translate the detected speech into a string of words. Speech recognition works by breaking down sounds detected by hardware into smaller, non-divisible sounds, called phonemes i.e., distinct units of sound. The speech recognition software attempts to match the detected phonemes with known words from a stored vocabulary. In most cases, successful conversion of acoustic signals must be based upon an existing vocabulary of known words. Once recognized, words may then be used in a variety of computer software applications for purposes such as document preparation, data entry, or command and control.

Even for limited vocabularies, traditional speech recognizers use complex algorithms which in turn need large storage systems and/or dedicated Digital Signal Processors (DSP) with high performance computers. Due to memory limitations and system processing requirements, in conjunction with power consumption limitations, embedded or local speech recognition engines provide recognition to only a fraction of the audio inputs recognizable by a host, network-based speech recognition engine. ASR implemented on wearable, miniaturized, handheld computing devices generally cannot recognize speaker independent, continuous speech in real-time. It is not always feasible to predict every word which can be possibly spoken by a user of a speech-enabled system and furthermore, the speech recognizer must deal with environment noise e.g., environment wherein several persons are speaking simultaneously. Finally, there is a great variability in how different speakers pronounce words, as well as a variability in how an individual speaker pronounces words from one time to another.

To reduce such variability another approach consists in spelling each word to be recognized however, despite the possibility of specifying words by spelling, there are drawbacks, such as the number of letters to spell (as the spelling of long words becomes a prone to errors and tedious process for the user), and the presence of "confusable" letters on spelled words (as this effect introduces a source for errors on the spell recognizer).

As a consequence, there is a need for an efficient method and systems for enabling access to electronic data from marked link in electronic and/or printed document.

### Summary of the Invention

Thus, it is a broad object of the invention to remedy the shortcomings of the prior art as described here above.

It is another object of the invention to provide a method and systems to improve access to information resource available on network such as Internet through reduced audio command.

It is a further object of the invention to provide a method and systems for determining the audio command adapted to distinguish the information resource available on network such as Internet from electronic and/or printed documents.

It is still a further object of the invention to provide a method and systems to improve access to information linked to electronic and/or printed document by spelling discrimination audio command.

The accomplishment of these and other related objects is achieved by a method for creating a link spelling table associated to a set of hyperlinks, comprising the steps of,
- selecting at least a portion of a text, said selected text portion embedding said set of hyperlinks;
- identifying the hyperlinks of the selected text portion;
- creating a link spelling table;
- determining a set of discrimination letter subsets characterizing each of said identified hyperlink; and,
- associating each discrimination letter subset to the address of the corresponding hyperlink in said link spelling table,
   and by a method for determining the address of an hyperlink comprising a subset of discrimination letters stored in an associated link spelling table according to the previous method, comprising the steps of,
- receiving an audio signal representing a discrimination letter subset;
- extracting the discrimination letter subset of said audio signal;
- accessing the link spelling table associated to said hyperlink;
- determining if said extracted discrimination letter subset belongs to said link spelling table; and,
- if said extracted discrimination letter subset belongs to said link spelling table, extracting the address associated to said extracted discrimination letter subset.

Further advantages of the present invention will become apparent to the ones skilled in the art upon examination of the drawings and detailed description. It is intended that any additional advantages be incorporated herein.

### Brief Description of the Drawings

**Figure 1** illustrates an example of the prior art for accessing information through Internet using a speech recognition based interface.
**Figure 2** illustrates a block diagram of a generic computer device in which the present invention can be implemented.
**Figure 3** depicts an electronic document comprising links to other documents.
**Figure 4,** comprising figures 4a and 4b, depicts an example of the algorithm illustrating the method of the invention for creating link spelling tables and for marking discrimination letters on the link names for electronic documents and for printed documents, respectively.
**Figure 5** shows an example of the algorithm used to determine the subsets of discrimination letters.
**Figure 6** illustrates the content of a link spelling table once the discrimination letters have been determined.
**Figure 7** illustrates an example of the environment for accessing information through Internet using a speech recognition based interface and discrimination letters.
**Figure 8** illustrates an example of the algorithm for triggering links by spelling discrimination letters marked on the link names of a document.
**Figure 9** illustrates an example of a handheld device implementing the invention.

### Detailed Description of the Preferred Embodiment

According to the invention there is provided a method for determining subsets of discrimination letters of link references, or link names, and for marking such link references, and a method for retrieving information by spelling discrimination letters of the link references.

The main principle of the invention consists in determining and highlighting a subset of discrimination characters for each hyperlink of the electronic or printed document part so that the hyperlink is activated when the corresponding subset of discrimination characters is spelled by the user. Activating an hyperlink means retrieving the data stored at the address defined in the hyperlink. According to the invention, a link spelling table is used to store the relation between each discrimination character subset and the corresponding link address. Depending upon the document type, the link spelling table can be dynamic or not. For printed documents, the link spelling tables are preferably done when the documents are setup or when they are printed. A link spelling table can be created for each page, for a plurality of pages such as chapter, or for the whole document. Concerning electronic documents displayed on computer screen, handheld device screen, mobile phone display, TV screen, or other electronic screen, the link spelling tables are preferably done when the document is displayed, for the visible part of the document, and dynamically maintained when the document is moved or scrolled.

Figure 2 illustrates a block diagram of a generic computer device, handheld device, or any kind of network connected device, generally referred to as computer 200, in which the present invention can be implemented. The system has a central processing unit (CPU) 205, a Read-Only Memory (ROM) 210, a Random Access Memory (RAM) 215, and an I/O subsystem 220, all of them being connected to a system bus 225. The I/O subsystem 220 may include one or more controllers for input/output devices such as keyboard 230, cursor control device 235, display device 240, Digital Signal Processing (DSP) unit 245 that can be connected to a microphone 250, mass storage device 255, and network interface 260. Depending upon the application of the system 200, one or more further I/O devices may be connected to the I/O subsystem 220. Typically, the hardware system 200 is controlled by an operating system that can be stored in ROM 210 or in mass storage device 255, which in turn controls various tools and applications that are generally loaded in RAM 215. Microphone 250 can be used for capturing utterances pronounced by a user and DSP 245 can be used to process and convert the utterances, received from the microphone 250, to phonemes. Since the system of the invention is based upon voice control, keyboard 230 is not required (or its use can be reduced).

### • Method for creating link spelling tables of electronic documents such as web pages and for marking discrimination letters in the link names

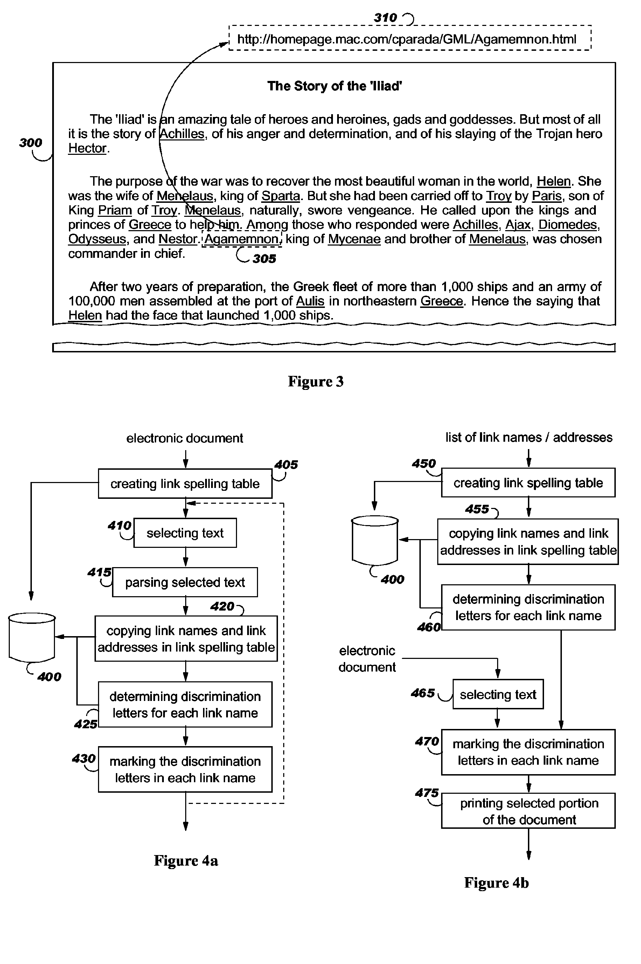

Figure 3 depicts a standard electronic document 300 comprising links to other electronic documents. For sake of illustration, links e.g., link 305, are highlighted using underlined characters however, the links may be identified by using a dedicated font color or any other particular marking. The address of the electronic document associated to each link e.g., address 310 corresponding to link 305, is generally coded in the source of the electronic document with the corresponding link name. For example, using Hyper Text Markup Language (HTML), the address of a link can be set using the address element of meta data **(<a href="**Link-address**">**Link-name**</a>**), like:

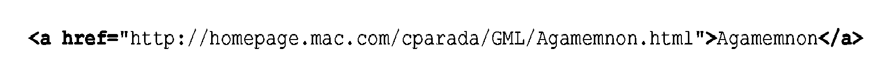

As a consequence, analyzing the content of a source document allows the determination of its links and of the corresponding addresses.

Figure 4a depicts an example of the algorithm illustrating the method of the invention for creating link spelling tables of electronic documents such as web pages and for marking discrimination letters in the link names. When the application receives an electronic document, it creates and initializes a link spelling table 400 associated to this electronic document (step 405). Then, a text portion of the document is selected (step 410). In a preferred embodiment, the selected text portion is the text portion that is displayed on the display device. The selected text portion is parsed (step 415) for extracting all the link names and the corresponding link addresses that are stored in the link spelling table 400 (step 420). It is to be noticed that it is not required to store the link names in the link spelling table 400 if the discrimination letters are marked in the document when they are determined. In such case, only the subsets of discrimination letters characterizing the link names and the link addresses must be stored in link spelling table 400. When the link names are identified, the application determines a subset of discrimination letters for each link name (step 425). The determined subset of discrimination letters are stored and associated with the corresponding link addresses, in the link spelling table 400. Then, the discrimination letters are marked on the displayed electronic document (step 430). As mentioned above, such marking may consist in displaying the letters with an underlined font or with a specific color. It is also to be noticed that if a letter belonging to a subset of discrimination letters appears several times in the corresponding link name, the letter to be marked in the link name is determined by the spelling order set at the determination step 425.

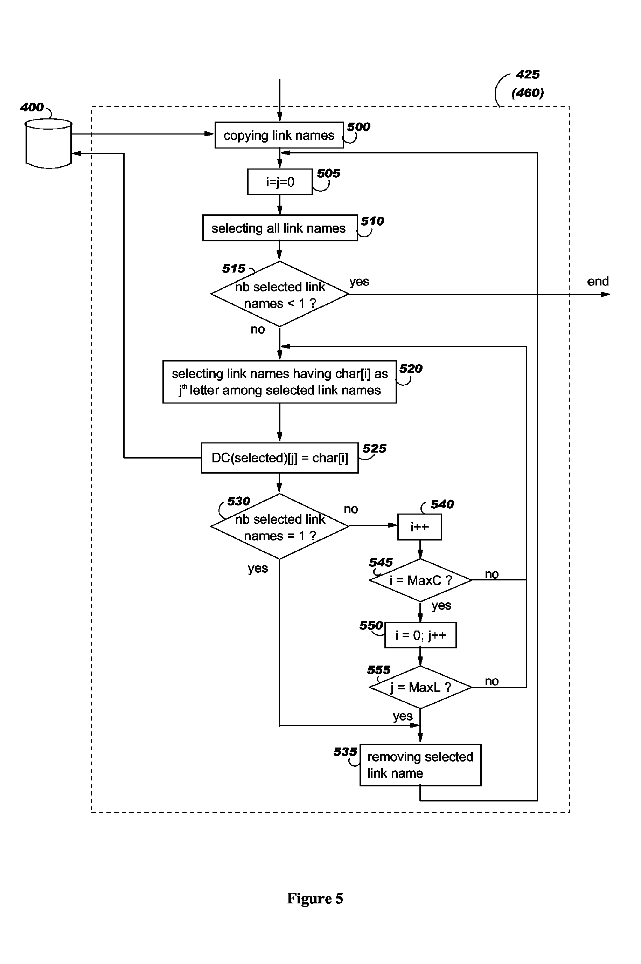

Figure 5 shows an example of the algorithm used to determine the subsets of discrimination letters. After having copied the list of link names in a temporary link name list (step 500) from the link spelling table 400, variables i and j are initialized i.e., variables i and j are set to zero (step 505). Variable j represents a letter position in a link name i.e., the position of a particular letter starting from the first character, and variables i represents an index used to determine a letter according to the alphabet used for coding the link names e.g., char[1]="a", char[2]="b", char[3]="c", and so on, *char* being a string of all the possible characters. All the link names of the temporary link name list are selected (step 510) and a test is performed to determine whether or not the number of selected link names is less than one (step 515). If the number of selected link names is less than one, the process is stopped. Else if the number of selected link names is equal to or greater than one, the link names having char[i] as j^{th} letter are selected among the set of selected link names i.e., the link names that j^{th} letter is different than char[i] are deselected (step 520). Then, char[i] is stored as a discrimination letter in link spelling table 400 for selected link names (step 525). Discrimination letters are stored sequentially in association to each corresponding link names. A test is then performed to determine whether or not the number of selected link names is equal to one (step 530). If the number of selected link names is equal to one, the selected link name is removed from the temporary link name list (step 535) and the algorithm is branched to step 505 so as to determine discrimination letters of remaining link names. Else if the number of selected link names is not equal to one, variable i is incremented by one (step 540) and a test is done to compare variable i with value MaxC that represents the number of different letters of the alphabet used to encode the link names (step 545). For example, using a standard alphabet without symbol such as comma, MaxC is equal to 26. If variable i is different than MaxC, the algorithm is branched to step 520 to refine the selection of link names. Else, if variable i is equal to MaxC, variable i is set to zero and variable j is incremented by one (step 550) and a test is done to compare variable j with value MaxL that represents the length of the longer link name (step 555). If variable j is different than MaxL, the algorithm is branched to step 520 to refine the selection of link names. Else, if variable j is equal to MaxL, all selected link names are removed from the temporary link name list (step 535) and the algorithm is branched to step 505 so as to determine discrimination letters of remaining link names.

For sake of clarity, the example illustrates above is simple. The algorithm for determining the discrimination letter should preferably take care of the number of discrimination letters and of the pronunciation similarity of letters. To optimize (i.e., to reduce) the number of discrimination letters, optimization algorithm such as simulated annealing can be used. Likewise, to optimize the choice of discrimination letters, a table indicating the pronunciation similarity degree between each letter couple can be used.

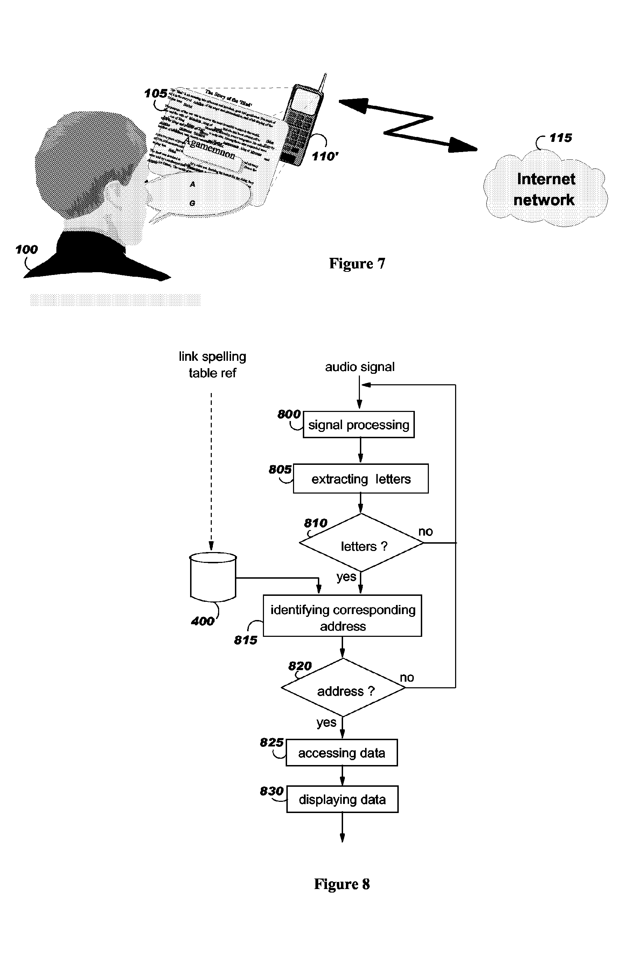

Figure 6 illustrates the content of a link spelling table 400 once the discrimination letters have been determined. For sake of illustration, link spelling table 400 comprises three columns 600, 605, and 610 wherein the link names, the corresponding discrimination letters, and the corresponding addresses are stored, respectively. For example, row 615 stores the link name *Aeneas* that discrimination letters are AE and that corresponding address is http://www.pantheon.org/articles/a/aeneas.html.

### • Method for creating link spelling tables of printed documents and for marking discrimination letters in the link names

If the printed document derives from an electronic document comprising embedded links as the one shown on figure 3, the algorithm discussed by reference to figure 4a may be used. In such case, this algorithm comprises a further step consisting in printing the selected text.

If the printed document derives from an electronic document that does not comprise embedded links e.g., scanned document, which is common, the algorithm for creating the link spelling table and for marking discrimination letters on the link names uses a list of link names from a different source, or different file.

Figure 4b depicts an example of the algorithm illustrating the method of the invention for creating link spelling tables of printed documents and for marking discrimination letters in the link names when the list of link names and the corresponding addressed can not be derived from the electronic document. When the application receives the list of link names and associated addresses, it creates and initializes a link spelling table 400 (step 450) wherein the link names and corresponding link addresses are stored (step 455). Then, the application determines a subset of discrimination letters for each link name (step 460). Such determination can be done according to the method described above by reference to figure 5. The determined subset of discrimination letters are stored and associated with the corresponding link addresses, in the link spelling table 400. Then, after having received the electronic document and selected a portion of the document (step 465), the link names of the document selected portion are identified and the discrimination letters are marked using a particular font or particular attributes such as underlining or coloring (step 470) and the selected part of the document is printed (step 470).

### • Method for triggering links by spelling discrimination letters marked on the link names

According to figure 7, it is shown a user 100 who pronounces the discrimination letters of a link name written in a document 105 displayed on the screen of a handheld device 110'. It must be noticed that document 105 can be also a printed document. The pronunciation of the letters A and G is analyzed by a speech recognition engine of the handheld device 110'. When the discrimination letters are recovered, the corresponding address is found in the link spelling table so as to access the corresponding data through the network 115 to which the handheld device 110' is connected. These data are displayed on the handheld device 110'. Alternatively, the accessed data can be "read" by the handheld device 110' using a text-to-speech synthesis software. As mentioned above, the connection between the handheld device 110' and the network 115 can be of any type (wide area network, local area network, wire connection, wireless connection, ...).

Figure 8 illustrates an example of the algorithm for triggering links by spelling discrimination letters marked in the link names of a document. The voice of a user is received by the system as an audio signal that is converted into an electrical signal that is preferably preprocessed for removing noise and to be normalized (step 800) before being analyzed for extracting the spelled letters (step 805). A test is performed to determine whether or not the system has extracted characters (step 810). If the signal does not comprise any distinguishable letters, the application waits for the next audio signal. Else if at least one character has been identified, the system compares this at least one letter with the discrimination letters of the selected link spelling table 400 (step 815). The selected link spelling table 400 is either the current one corresponding to the current displayed electronic document or one previously stored on the device running the application that user has given the reference corresponding to the document he/she is reading. Another test is then done to determine whether or not an address is associated to the extracted letters (step 820). If none address is associated to the extracted letters, application waits for the next audio signal. Else if an address is associated to the extracted letters, the system accesses the corresponding data (step 825), through a network or locally on the computer running the application. Then, the system displays the accessed data (step 830).

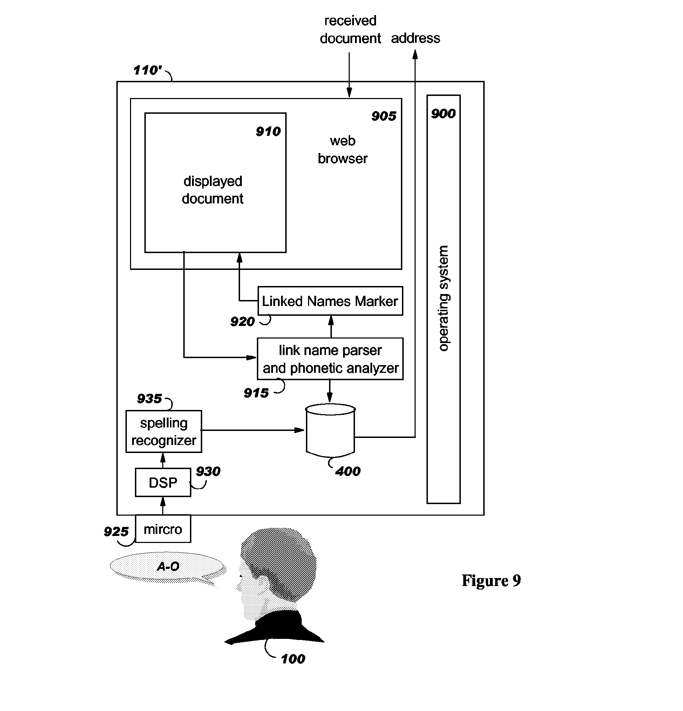

Figure 9 illustrates an example of a handheld device 110' implementing the invention. Such handheld device 110' preferably comprises an operating system 900 and a web browser 905 adapted for displaying a document 910. When the document 910 is displayed, the web browser launches a link name parser module 915, preferably coupled with a phonetic analyzer, for determining the discrimination letters of the link names embedded within the displayed document 910 and for storing such discrimination letters with the associated addresses in the link spelling table 400. The link name parser module 915 launches a link name marker 920 for marking the determined discrimination letters in the link names of the displayed document 910. When the user 100 spells letters, the audio signal is converted into an electrical signal by a microphone 925. The electrical signal is preferably transferred to a Digital Signal Processor 930 (DSP) to be preprocessed as mentioned above. Then a spelling recognizer extracts the letters that are compared with the ones stored in the link spelling table 400. If an adress corresponds to the extracted letters, it is used to access the corresponding data. For example, such address can be transferred over Internet by the web browser 905 that in turn, receives a document that can be displayed. At this stage, the link spelling table can be erased by a new one comprising the link name discrimination letters of the received document.

In the preferred embodiment, it is assumed that speech comes from a local microphone but it must be understood that it can come from a remote sensor e.g., through a telephone. Likewise, all the processing can be done locally on the user's device or on a remote device e.g., a network server. For example, the user's device can transmit the reference of a document to a remote server that determines the discrimination letters of the embedded links. The document and the set of discrimination letters, or the document wherein the discrimination letters are marked, are transmitted back to the user's device, to be displayed. For accessing a marked link, the user's device can transmit the reference of an electronic document, or a printed document, and a sound, or a preprocessed sound. The sound, or the preprocessed sound, can be processed by the server and compared with the discrimination letters of the link spelling table that can be stored locally in the server. After having determined the address corresponding to the link associated to the pronounced discrimination letters, the server accesses the corresponding data and transmits it to the user's device.

Among the advantages provide by the method and systems of the invention, it should be noted:
- increasing the accuracy of the voice system for accessing link.
- improving the device interface by simplifying the control commands.

Naturally, in order to satisfy local and specific requirements, a person skilled in the art may apply to the solution described above many modifications and alterations all of which, however, are included within the scope of protection of the invention as defined by the following claims.

## Claims

1. A method for creating a link spelling table associated to a set of hyperlinks, comprising the steps of,
- selecting at least a portion of a text, said selected text portion embedding said set of hyperlinks;
- identifying the hyperlinks of the selected text portion;
- creating a link spelling table;
- determining a set of discrimination letter subsets characterizing each of said identified hyperlink; and,
- associating each discrimination letter subset to the address of the corresponding hyperlink in said link spelling table.

2. The method of claim 1 wherein said step of identifying the hyperlinks of the selected text portion comprises the step of parsing said selected text portion.

3. The method of claim 1 wherein said step of identifying the hyperlinks of the selected text portion comprises the steps of
- parsing an hyperlink list; and,
- comparing said parsed hyperlinks with the content of said selected text portion.

4. The method of any one of claims 1 to 3 wherein the selected text portion corresponds to a screen displayable text portion.

5. The method of claim 4 wherein all the steps are repeated each time the displayed text portion is changed.

6. The method of either claim 4 or claim 5 further comprising the steps of marking the discrimination letter subset in each hyperlink of the selected text portion and displaying said selected text portion on a screen.

7. The method of any one of claims 1 to 3 wherein the selected text portion corresponds to a printable document part, an identifier of printable document part being associated to said link spelling table.

8. The method of claim 7 wherein all the steps are repeated for each part of the printable document.

9. The method of either claim 7 or claim 8 wherein a printable document part is a page.

10. The method of any one of claims 7 to 9 further comprising the steps of marking the discrimination letter subset in each hyperlink of the selected text portion and printing the selected text portion.

11. A method for determining the address of an hyperlink comprising a subset of discrimination letters stored in an associated link spelling table according to the method of any one of the claims 1 to 10, comprising the steps of,
- receiving an audio signal representing a discrimination letter subset;
- extracting the discrimination letter subset of said audio signal;
- accessing the link spelling table associated to said hyperlink;
- determining if said extracted discrimination letter subset belongs to said link spelling table; and,
- if said extracted discrimination letter subset belongs to said link spelling table, extracting the address associated to said extracted discrimination letter subset.

12. The method of claim 11 wherein said step of accessing said link spelling table comprises the steps of receiving an identifier from the user and accessing the link spelling table associated to said identifier.

13. The method of claim 11 wherein said step of accessing said link spelling table comprises the steps of,
- selecting at least a portion of a text;
- parsing said selected text portion;
- creating a link spelling table;
- determining a set of discrimination letter subsets characterizing each of said identified hyperlink; and,
- associating each discrimination letter subset to the address of the corresponding hyperlink in said link spelling table.

14. The method according to any one of claims 11 to 13 further comprising the steps of accessing the data localized at said address and displaying said accessed data.

15. The method according to any one of the previous claims wherein the method is implemented within a service provider server.

16. The method according to any one of claims 1 to 14 wherein the method is implemented within a user's device.

17. The method of claim 16 wherein said user's device is a handheld device.

18. An apparatus comprising means adapted for carrying out each step of the method according to any one of the claims 1 to 14.

19. A computer-like readable medium comprising instructions for carrying out each step of the method according to any one of the claims 1 to 14.
